# EUROPEAN PATENT APPLICATION

(11) **EP 1 460 321 A1**
(43) Date of publication of application: **22.09.2004**
(21) Application number: 03425163.7
(22) Date of filing: 17.03.2003
(51) Int. Cl.: F16K 35/02

(54) **Valve control device with locking means**

(71) Applicant: F.I.P. Formatura Iniezione Polimeri S.p.A, 16015 Casella (Genova) (IT); Société Etex de Recherches Techniques, S.E.R.T., 78540 Vernouillet (FR)
(72) Inventor: Mazzacano, Corrado, F.I.P. Form. Iniez. Pol. SpA, 16015 Casella (Genova) (IT); Bisio, Andrea, F.I.P. Form. Iniez. Pol. SpA, 16015 Casella (Genova) (IT)
(74) Representative: Crippa, Paolo Ernesto

(57) **Abstract**

A control device (1) for a valve with, inside a valve body (6), a plug (7) actuatable by means of an actuating spindle (3) that extends through a passage in the said valve body which terminates in a supporting portion (15) on the outside of the valve body (6). The control device (1) comprises a handle (2) connected to the said spindle (12, 3) to actuate the plug (7), releasable locking means (4, 5) for locking the handle (2) relative to the valve body (6) in predetermined setting positions and a release button (8) acting on the locking means (4, 5), in which the said release button (8) is situated on a side of the handle (2) that is essentially away from the valve body (6), and the locking means (4, 5) are releasable by pressure on the button (8) essentially towards the valve body (6).

## Description

The present invention relates to a valve control device, particularly for valves in fluid conveying and distributing systems.

Valves in fluid conveying and distributing systems, such as directional control valves, regulating valves, drain valves or selector valves, are usually controllable by means of a manual control device, such as a knob or handle, or by an automatic control device, such as an electric or electromagnetic device. The control device acts via an actuating spindle on a plug such as a ball or cone, which in turn controls the flow of fluid through the valve.

A known type of manual control device has a handle rotatably mounted on the valve body and connected, by an actuating spindle, to a plug inside the valve body, in such a way that it is possible to control the position of the plug, and hence control the flow, by means of the handle. To prevent undesirable movements of the plug, certain valves have a means of locking the handle relative to the valve body by means of a "trigger" button on the underside of the handle where the fingers of the user can operate it when grasping the handle. The trigger button acts on a handle stop tooth which engages in a toothed ring on the valve body to prevent movement of the handle and hence of the plug.

The control devices of the prior art present a number of serious disadvantages in situations requiring rapid actuation, such as failures and emergencies. In particular when there are leaks of aggressive media, such as steam, hot or pressurized liquids or chemicals, fast, safe operation of the valve is prevented by the impossibility of releasing the handle while wearing the protective gloves. Moreover, for various reasons it is not always possible to completely grasp the control handle with the fingers and blockages of the handle, caused for example by clogging, are sometimes very difficult to eliminate.

The object of the present invention is therefore to provide a valve control device having characteristics such as to obviate the drawbacks cited with reference to the prior art.
This object is achieved by means of a control device for a valve having, inside a valve body, a plug actuatable by means of an actuating spindle that extends through a passage in the said valve body which terminates in a supporting portion or stalk on the outside of the valve body, the said control device comprising:
- a handle connected to the said actuating spindle to actuate the plug;
- releasable locking means for locking the handle relative to the valve body in predetermined setting positions; and
- a release button acting on the locking means, in which the said release button is situated on a side of the handle that is essentially away from the valve body, and the locking means are releasable by pressure on the button essentially towards the valve body.

To explain the invention and its advantages more clearly, an illustrative, non-restrictive example is now described with reference to the appended drawings, in which:

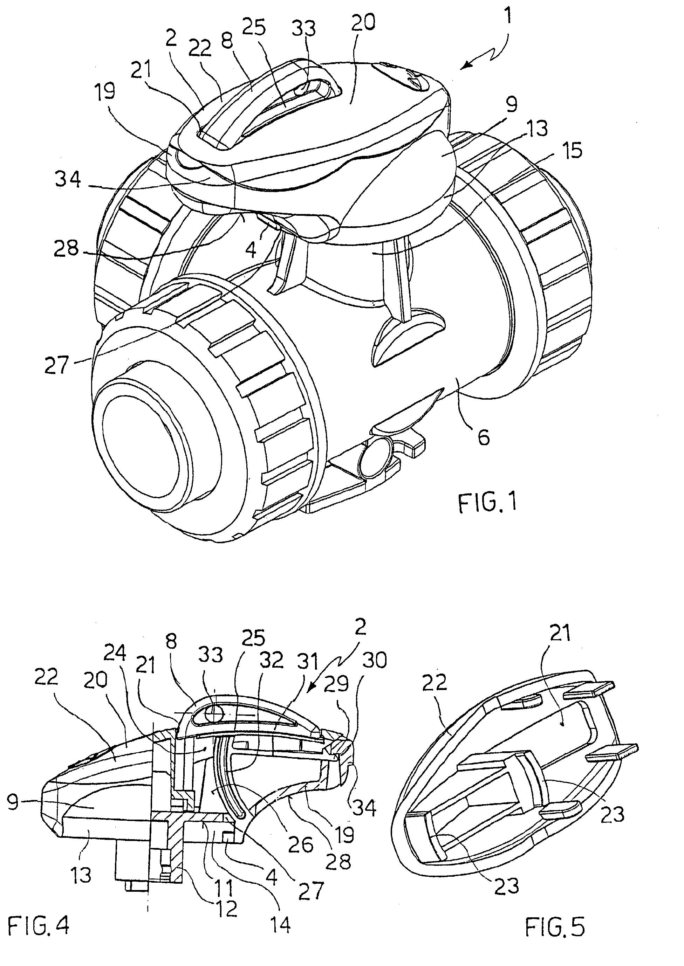

Figure 1 is a perspective view of the control device according to the invention;

Figure 2 is a cross section through the device seen in Figure 1;

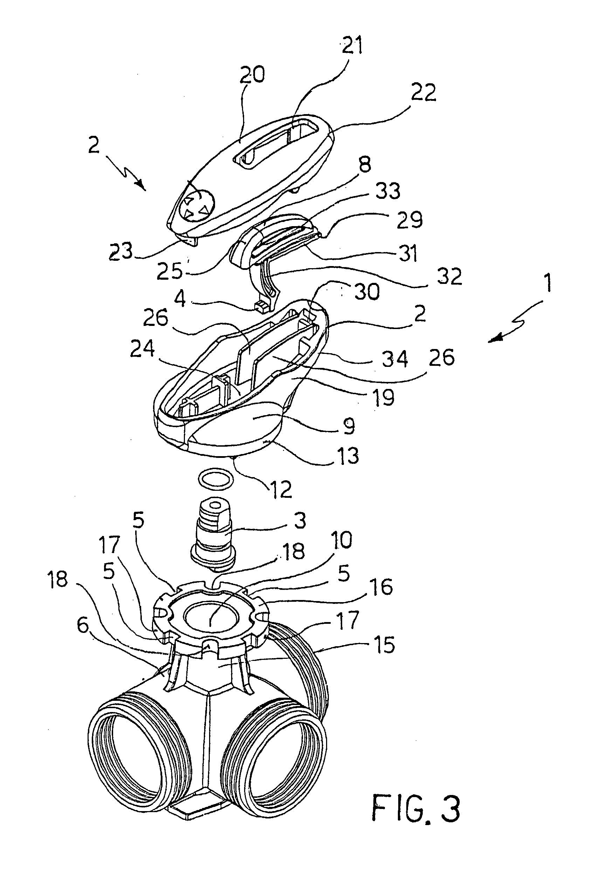

Figure 3 is an exploded view of the device seen in Figure 1;

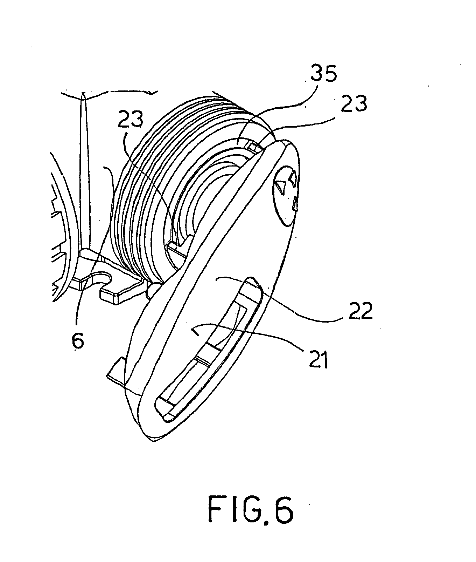

Figure 4 is a side view, partly in section, of a detail of the control device according to the invention;

Figure 5 is a perspective view of a detail of the control device according to the invention; and

Figure 6 shows one mode of use of the detail seen in Figure 5.
With reference to the figures, a control device for a valve is indicated as a whole by the reference 1. The control device 1 comprises a handle 2 rotatably connectable to a supporting portion or stalk 15 on a valve body 6. The handle 2 is capable of positioning, by means of an actuating spindle 3 inside a passage 10 formed inside the valve body 6, a closing element 7 located inside the valve body 6. The handle 2 is provided with a release button 8 which acts on releasable locking means 4, 5 designed to lock the handle 2 in predetermined setting positions. The release button 8 is situated on a side of the handle 2 that is essentially away from the valve body 6, and the locking means 4, 5 are releasable by pressure on the button 8 essentially towards the valve body 6.

The handle 2 comprises a base 9 in the shape of a spherical cap encircling a reference axis s, with a circular, essentially flat lower surface 11 from which there centrally projects a connecting sleeve 12 and, around the outer circumference, a lower edge 13 which forms an essentially cylindrical wall. This lower edge 13 defines, together with the connecting sleeve 12 and the lower surface 11, an essentially annular cavity 14 designed to accommodate a flange 16 on the supporting portion 15 of the valve body 6.

On an upper side of the base 9, facing away from the lower surface 11, is an elongate grip 19 that extends preferably along a diameter of the base 9 and projects from the side of the latter. Advantageously, the length of the free portion 34 of the grip 19 which projects beyond the edge of the base 9 is less than or approximately equal to the diameter of the base 9.

The grip 19 is inclined with respect to the base 9 and with respect to the reference axis s which also forms the axis of rotation of the handle 2. In particular, the grip 19 is inclined towards the base 9 so that its free portion 34 is higher (i.e. further from the valve body 6) than the portion connected to the base 9. In other words, a hand resting on the grip 19 will tend to slide towards the base 9, and therefore towards the reference axis s, and at the same time downwards, in the direction of the valve body 6.

The grip 19 is of an elongate shape, preferably rounded with an essentially convex upper surface 20 on the side away from the valve body 6, and an essentially concave lower surface 28 on the side towards the valve body 6.

The upper surface 20 has an aperture 21 able to accommodate the abovementioned release button 8 in such a way that the latter projects above the said upper surface 20.

Advantageously, the aperture 21 is elongate, preferably rectangular, in shape and extends predominantly along the free portion 34 of the grip 19.

In accordance with one embodiment, the handle 2, and in particular the grip 19, comprises a cover piece 22 which is removably attachable, preferably by an interference fit or by a snap fit, to the handle 2. The cover piece 22 forms the said upper surface 22 of the grip 19 and forms a tool to facilitate the assembly and disassembly of the valve.

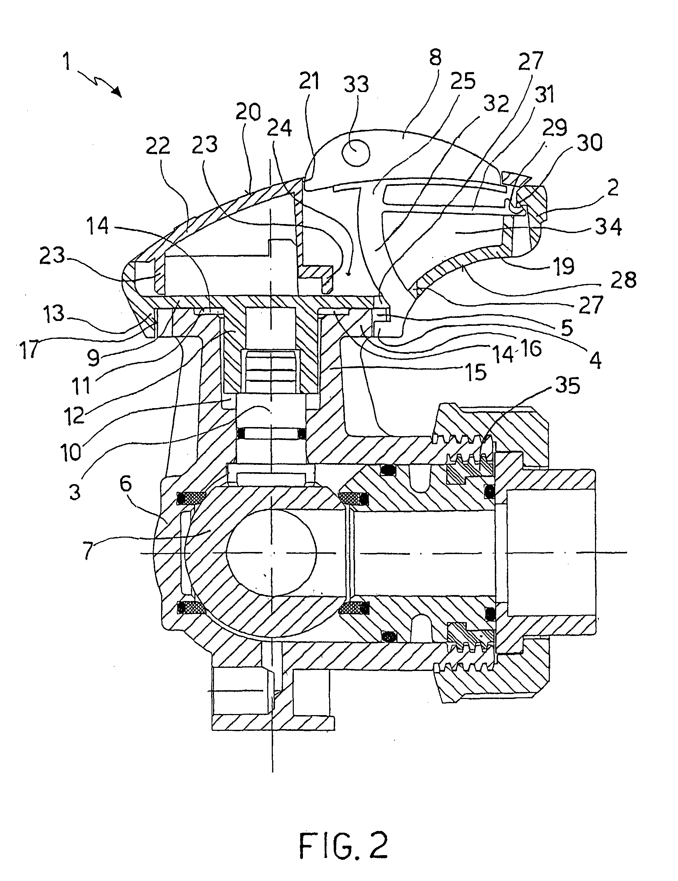

In this particular case, the said tool takes the form of two rigid tabs 23 set at a distance from each other and projecting from the cover piece 22 towards the base 9. The rigid tabs 23 are designed to engage in two recesses formed in tightening rings 35 (Figure 2), while the rest of the cover piece 22 is used as the handle of the tool.

The cover piece 22 gives access to a cavity 24 inside the grip 19 containing two parallel walls 26 extending approximately radially relative to the reference axis s. The walls 26 extend along the free portion 34 of the grip 19 either side of the button 8 aperture 21 and form a seat for an actuating piece 25 which will be described later. Between the walls 26 is a through aperture 27 extending through to the said lower surface 28 of the grip 19. More precisely, the through aperture 27 is at the lower edge 13, which in turn is interrupted at and by the through aperture 27.

Between the two parallel walls 26, at the outer end of the grip 19, is a slot 30 designed to engage around the end of a tab 31 belonging to the actuating piece 25.

The actuating piece 25 comprises an elongate and preferably rounded upper portion forming the abovementioned button 8, and a transmission bar 32 projecting from an underside of the button 8.

In accordance with one embodiment, the button 8 is curved, with the vertex of the curve displaced to one side, in such a way that when mounted in the handle 2, and specifically in the grip 19, the button 8 has roughly the opposite inclination to the inclination of the grip itself. In other words the profile of the button 8 becomes higher as it approaches the base 9 or rather the reference axis s.

The button 8 advantageously also has a transverse hole 33 designed to accommodate a pin (not shown in the figures) for preventing accidental actuation of the button 8. The transverse hole 33 is preferably positioned beneath the vertex of the button 8.

The transmission bar 32 is connected, preferably as one piece, to the button 8 and essentially forms an arc that extends advantageously along a circumference about an axis of rotation of the actuating piece 25.

The end of the transmission bar 32 furthest from the button 8 forms a tooth 4 for engaging in recesses 5 in the valve body 6.

The actuating piece 25 also includes a preferably elastically acting tab 31 with a stop tooth 29. The tap 31 is connected to the transmission bar 32 close to the button 8 and extends in the longitudinal direction of the button 8.

The free end of the tab 31 is inserted, by means of the stop tooth 29, into the slot 30 in the grip 19, forming a rigid connection between the actuating piece 25 and the grip 19.

The actuating piece 25, specifically the transmission bar 32, is situated between the parallel walls 26, which guide it in its movement, and the elastic compliance of the tab 31 permits an elastically opposed rotary and translational movement of the button 8 and consequently of the transmission bar 32 with the tooth 4.

In other words the button 8 is held elastically in a locked position in which the tooth 4 engages in one of the recesses 5 on the valve body 6, and, owing to the elastic bending of the tab 31 during manual actuation of the button 8 by pressing it down (that is towards the valve body 6) or towards the reference axis s, the actuating piece 25 - more precisely the button 8, the transmission bar 32 and the tooth 4 - execute a rotary movement in which the tooth 4 moves radially away from the reference axis s and hence from the flange 16, together with a translational movement in which the tooth 4 moves axially towards the valve body 6, moving it simultaneously axially away from the flange 16.

The flange 16 of the supporting portion or "stalk" 15 is essentially annular and has a circumferential outer surface 17 designed to fit inside one of the inner surfaces of the annular cavity 14, preferably at the lower edge 13, of the handle 2. The outer surface 17 contains one or more recesses 5 able to take the tooth 4 of the handle 2 in order to lock the handle relative to the valve body 6.

The recesses 5 are preferably rectangular and are positioned in predetermined setting positions to allow precise positioning of the handle 2 and, consequently, of the plug 7.

In accordance with one embodiment, the recesses 5 are arranged at intervals around the circumference of the flange 16 and individual recesses or groups of recesses can be closed or covered by blocks (not shown in the figures) to adapt the control device 1 to the particular use.

Another embodiment comprises, around the flange 16, additional recesses 18 of preferably rounded shape to accommodate attachment members for attaching an automatic drive device such as an electric motor. The additional recesses 18 are preferably also shaped to allow engagement of the tooth 4.

The handle 2 is mounted on the valve body 6 by inserting the connecting sleeve 12 into the passage 34 inside the supporting portion 15 and then connecting the connecting sleeve 12 to the actuating spindle 3 and, via the latter, to the plug 7. The handle 2 is able to rotate relative to the valve body 6 about the reference axis s, and the annular cavity 14 of the handle 2 accommodates the flange 16 of the valve body 6. The lower edge 13 of the handle 2 at least partly, but preferably completely, covers the circumferential outer surface 17 of the flange 16 and, consequently, the recesses 5 which are well protected against undesirable deposits of impurities and clogging.

The control device 1 and the valve comprising this device are preferably moulded from synthetic material such as polypropylene or PVC. Alternatively they may be made of metal.

The operation of the control device according to the invention is described below.

During normal operation of the valve, such as for example a ball valve, the plug 7 is positioned by turning the handle 2 to the desired setting position. If the setting position coincides with one of the positions defined by the recesses 5, the tooth 4 snap-engages into the appropriate recess 5, thus providing precise positioning of the plug 7 as well as locking the handle 2 and, consequently, the plug 7 in the setting position.

The setting positions are easily adaptable to the requirements of use because individual recesses or groups of recesses can be closed selectively with suitable blocks.

When the handle is locked, the tooth 4 covers the through aperture 27 in the lower edge 13 and prevents deposits of impurities or obstructions in the recesses 5.

To change the setting position of the valve, the user places his hand on the inclined grip of the handle and pushes towards the valve body. The user's hand now tends automatically to orient itself and move into the correct position to operate the button 8. Due to the particular support of the button 8, the latter moves down, that is towards the valve body, and simultaneously rotates, which moves the tooth 4 both radially and axially away from the recess 5 and releases the handle 2.

When the handle is released, the through aperture 27 allows access from the outside both to the tooth 4 and to the recess 5 for quick and easy removal of any obstacles preventing handle movement. This is particularly important in emergencies and failures.

To prevent undesirable operation of the handle 2, the button can be locked by inserting a pin through the transverse hole 33.

Also, during assembly of the valve the cover piece 22 is readily usable as a tool for screwing or unscrewing tightening rings 35 used for example to fix the position of a ball inside the valve body.

The control device according to the present invention has numerous advantages.

Owing to the position of the release button, it can be operated even without the use of the user's fingers and in particular with protective gloves.

The special ergonomic shaping of the handle and the inclination of the grip towards the valve body direct the user's hand naturally in the correct direction to operate the release button. This effect, which is particularly advantageous in emergencies, is further increased by the fact that the button is inclined in the opposite direction to the inclination of the grip.

The recesses are efficiently protected from external effects, and potential obstacles to the movement of the handle are automatically expelled during withdrawal of the tooth from the recess, and are in any case easily removable because the recess and the tooth are exposed in the release position.

Clearly, to fulfil any specific requirements which may arise, other modifications and variations may be made by those skilled in the art to the control device according to the present invention, without departing from the scope of protection of the invention as defined in the following claims.

## Claims

1. Control device (1) for a valve having, inside a valve body (6), a plug (7) actuatable by means of an actuating spindle (3) that extends through a passage in the said valve body which terminates in a supporting portion (15) on the outside of the valve body (6), the said control device (1) comprising:
- a handle (2) connected to the said spindle (12, 3) to actuate the plug (7);
- releasable locking means (4, 5) for locking the handle (2) relative to the valve body (6) in predetermined setting positions; and
- a release button (8) acting on the locking means (4, 5), in which the said release button (8) is situated on a side of the handle (2) that is essentially away from the valve body (6), and the locking means (4, 5) are releasable by pressure on the button (8) essentially towards the valve body (6).

2. Control device (1) according to Claim 1, in which the said handle (2) is rotatable about a reference axis (s) and the said supporting portion (15) has an essentially annular flange (16) that extends around the said axis (s) and comprises one or more recesses (5) capable of receiving a tooth (4) belonging to the handle (2) in order to lock the handle in the said setting positions.

3. Control device (1) according to Claim 2, in which the said recesses (5) are formed in a circumferential outer surface (17) on the said flange (16).

4. Control device (1) according to Claim 2 or 3, comprising elastically acting means (31) for pushing the said tooth (4) elastically against the flange (16).

5. Control device (1) according to Claim 3 or 4, in which the tooth (4) is movable, by operating the release button (8), in an essentially radial direction relative to the axis (s) in order to free the recess (5).

6. Control device (1) according to Claim 3, 4 or 5, in which the tooth (4) is movable, by operating the release button (8), in an essentially parallel direction relative to the axis (s) in order to free the recess (5).

7. Control device (1) according to any one of Claims 2 to 6, in which the tooth (4) is movable away from the flange (16) both radially and axially in such a way as to permit access, from the outside, to the recess (5) and to the tooth (4).

8. Control device (1) according to any one of Claims 2 to 7, comprising blocks for closing or covering one or more of the said recesses (5).

9. Control device (1) according to any one of Claims 2 to 8, in which the said handle (2) comprises an essentially annular cavity (14) bounded externally by a lower edge (13) and capable of accommodating the said flange (16) in such a way that the said lower edge (13) at least partly covers the said recesses (5).

10. Control device (1) according to Claim 9, in which the said lower edge (13) comprises, in the position corresponding to the tooth (4), a passage (27) and the tooth (4) is capable of closing the said passage (27) in the locked position to prevent access from the outside to the recess (5) and of freeing the said passage (27) in the disengaged position to permit access both to the recess (5) and to the tooth (4).

11. Control device (1) according to any one of the preceding claims, in which the said handle (2) is rotatable about a reference axis (s) and has a grip (19), the said grip (19) extending essentially in a radial direction relative to the reference axis (s) and being inclined relative to the said axis (s).

12. Control device (1) according to Claim 11, in which the grip (19) is inclined in such a way that the nearer end of the grip (19) to the reference axis (s) is also axially nearer to the valve body (6).

13. Control device (1) according to Claim 11 or 12, in which the release button (8) is mounted on the grip (19) and has an inclination, relative to the reference axis (s), that is essentially the opposite of that of the grip (19).

14. Control device (1) according to any one of Claims 11 to 13, in which the grip (19) is of a rounded shape with an essentially convex upper surface (20) facing away from the valve body (6) and an essentially concave lower surface (28) facing towards the valve body (6), in which the release button (8) projects from the said upper surface (20).

15. Control device (1) according to Claim 14, comprising a cover piece (22) forming the said upper surface (20), in which the said cover piece (22) is removably attachable to the handle (2) and acts as a tool to facilitate the assembly and disassembly of the valve.

16. Control device (1) according to any one of the preceding claims, in which the release button (8) has a transverse hole (33) designed to accommodate a pin for preventing accidental actuation of the button (8).

17. Control device (1) according to any one of the preceding claims, fitted with an actuating piece (25) inside the handle (2), the actuating piece (25) comprising an elongate upper portion that forms the button (8) and a transmission bar (32) projecting from an underside of the button (8) and having an end, furthest from the button (8), that forms the tooth (4).

18. Control device (1) according to Claim 17, in which the actuating piece also includes an essentially elastically acting tab (31) connected to the transmission bar (32) and extending in the longitudinal direction of the button (8), in which the tab (31) is connected to the grip (19) and the elastic compliance of the tab (31) permits an elastically opposed rotary and translational movement of the button (8) and of the transmission bar (32) with the tooth (4).

19. Control device (1) according to Claim 17 or 18, in which the button (8) is held elastically in a locked position in which the tooth (4) engages in one of the recesses (5) on the valve body (6).

20. Control device (1) according to any one of Claims 17 to 19, in which the actuation of the button (8) by pressure towards the valve body (6) or towards the reference axis (s) involves a rotary movement of the actuating piece (25) that withdraws the tooth (4) radially from the flange (16) and a translational movement that displaces the said tooth (4) axially towards the valve body (6) and axially away from the flange (16).

21. Valve having, inside a valve body (6), a plug (7) actuatable by means of a spindle (3) that extends through a passage in the said valve body (6) which terminates in a supporting portion (15) on the outside of the valve body (6), in which the said valve comprises a control device (1) according to any one of the preceding claims.
